# EUROPÄISCHE PATENTSCHRIFT

(11) **EP 4 272 537 B1**
(45) Veröffentlichungstag und Bekanntmachung des Hinweises auf die Patenterteilung: **29.10.2025**
(21) Anmeldenummer: 23161793.7
(22) Anmeldetag: 14.03.2023
(51) Int. Cl.: A01D 41/127, B60W 10/02, B60W 10/06, B60W 10/30, B60W 30/188, B60W 50/00

(54) **SELBSTFAHRENDE LANDWIRTSCHAFTLICHE ARBEITSMASCHINE**
SELF-PROPELLED AGRICULTURAL WORKING MACHINE
MACHINE AGRICOLE AUTOMOTRICE

(30) Priorität: 04.05.2022 DE 102022110974
(43) Veröffentlichungstag der Anmeldung: 08.11.2023
(73) Patentinhaber: CLAAS Selbstfahrende Erntemaschinen GmbH, 33428 Harsewinkel (DE)
(72) Erfinder: Sprigade, Daniel, 59427 Unna (DE); Wohlfahrt, Fabian, 33428 Harsewinkel (DE); Wilken, Andreas, 49143 Bissendorf (DE)
(74) Vertreter: CLAAS Gruppe

(56) Entgegenhaltungen:
- EP-A1- 3 259 976
- EP-A1- 3 298 872
- DE-T2- 60 302 604

## Beschreibung

Die vorliegende Erfindung betrifft eine selbstfahrende landwirtschaftliche Arbeitsmaschine zum Aufnehmen, Bearbeiten und Weiterleiten von Erntegut.

In der DE 10 2012 105 881 A1 ist beispielsweise eine selbstfahrende landwirtschaftliche Arbeitsmaschine mit Arbeitsaggregaten und einem diese Arbeitsaggregate antreibenden Verbrennungsmotor beschrieben, wobei eine Steuervorrichtung bei einsetzender Motordrückung zumindest einen Arbeitsparameter wenigstens eines Arbeitsaggregates in Abhängigkeit von der Drehzahl des Verbrennungsmotors automatisch anpasst.

Die Druckschrift DE 603 02 604 T2 offenbart einen Mähdrescher, wobei eine Steuerungseinrichtung eingerichtet ist, die Kupplung zwischen Verbrennungsmotor und Arbeitsaggregaten in Abhängigkeit der Motordrehzahl derart zu steuern, dass die Last wenigstens teilweise entkoppelt wird, um ein Abwürgen des Verbrennungsmotors im Falle von unerwarteten Lastspitzen zu vermeiden. Dabei wird die Änderung der Drehzahl bezüglich eines Schwellwerts überwacht, um eine schnelle Reaktion zu erlauben.

Die Druckschrift EP 3 259 976 A1 offenbart einen Feldhäcksler, wobei auf Grundlage entsprechender Sensorik das Vorfeld der Erntemaschine überwacht wird, um so vorausschauend eine Laständerung des Verbrennungsmotors beispielsweise wegen unterschiedlicher Bestandseigenschaften des Ernteguts zu prognostizieren. Auf Grundlage dieser Prognoseinformationen kann dann der Verbrennungsmotor prädiktiv in unterschiedlichen Leistungsstufen betrieben werden.

Der vorliegenden Erfindung liegt die Aufgabe zugrunde, eine verbesserte oder zumindest eine alternative Ausführungsform einer selbstfahrenden landwirtschaftlichen Arbeitsmaschine anzugeben, wobei insbesondere ein verbesserter Betrieb des Verbrennungsmotors bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass vorausschauend eine ungeplante bevorstehende Drehzahländerung des Verbrennungsmotors ermittelt und dieser ungeplanten bevorstehenden Drehzahländerung des Verbrennungsmotors entgegengewirkt wird.

Die erfindungsgemäße selbstfahrende landwirtschaftliche Arbeitsmaschine zum Aufnehmen, Bearbeiten und Weiterleiten von Erntegut kann als selbstfahrender Mähdrescher oder selbstfahrender Feldhäcksler ausgebildet sein.

Eine solche selbstfahrende landwirtschaftliche Arbeitsmaschine kann zur Aufnahme, Bearbeitung, und/oder Weiterleitung des Ernteguts wenigstens eine oder mehrere Arbeitsaggregate aufweisen. Ein solches Arbeitsaggregat kann ein an die Arbeitsmaschine anbringbares Vorsatzgerät, ein Schrägförderer der Arbeitsmaschine, eine Dreschvorrichtung der Arbeitsmaschine, eine Abscheidevorrichtung der Arbeitsmaschine, eine Reinigungsvorrichtung der Arbeitsmaschine, ein Kornelevator der Arbeitsmaschine, eine Überkehrschnecke der Arbeitsmaschine, eine Korntankentleervorrichtung der Arbeitsmaschine, ein Nachbeschleuniger der Arbeitsmaschine, eine Kornschnecke und/oder eine Korntankschnecke sein.

Ferner weist die selbstfahrende landwirtschaftliche Arbeitsmaschine mehrere Nebenaggregate auf. Während ein Arbeitsaggregat der selbstfahrenden landwirtschaftlichen Arbeitsmaschine zur Aufnahme, Bearbeitung, und/oder Weiterleitung des Ernteguts erforderlich ist, ist diese Aufnahme, Bearbeitung, und/oder Weiterleitung des Ernteguts auch im Falle abgeschalteter Nebenaggregate möglich. Mit anderen Worten ausgedrückt, stellen die Nebenaggregate im Vergleich zu den Arbeitsaggregaten andere Aggregate der selbstfahrenden landwirtschaftlichen Arbeitsmaschine dar. Mit anderen Worten ausgedrückt, können Arbeitsaggregate des selbstfahrenden Mähdreschers auf das Erntegut einwirken, während Nebenaggregate nicht auf das Erntegut einwirken können. Unter Einwirkung auf das Erntegut kann Aufnahme, Bearbeitung, und/oder Weiterleitung des Ernteguts verstanden werden.

Die selbstfahrende landwirtschaftliche Arbeitsmaschine weist einen Verbrennungsmotor, insbesondere einen Dieselmotor, auf. Zwischen dem Verbrennungsmotor und jedem Nebenaggregat ist jeweils eine einstellbare Kopplung ausgebildet sein. Ferner ist zwischen dem Verbrennungsmotor und jedem Arbeitsaggregat jeweils eine einstellbare Kopplung ausgebildet sein. Unter einer Kopplung kann eine mechanische, eine elektrische, eine pneumatische und/oder eine hydraulische Kopplung zwischen dem Verbrennungsmotor und einem Nebenaggregat und/oder einem Arbeitsaggregat verstanden werden, wobei die Kopplung dazu ausgebildet ist, dass ausgehend vom Verbrennungsmotor über die Kopplung ein Antrieb des gekoppelten Nebenaggregates und/oder des gekoppelten Arbeitsaggregates ermöglicht wird. Eine einstellbare Kopplung kann derart ausgebildet sein, dass eine dem gekoppelten Nebenaggregat und/oder dem gekoppelten Arbeitsaggregat über die Kopplung vom Verbrennungsmotor übertragene Leistung einstellbar ist. Eine Kopplung kann mittels wenigstens einer Kopplungsvorrichtung oder mehrerer Kopplungsvorrichtungen, insbesondere wenigstens einer Getriebevorrichtung, ausgebildet sein, die zwischen dem Verbrennungsmotor und einem Nebenaggregat und/oder einem Arbeitsaggregat jeweils eine Koppelung ermöglicht.

Die selbstfahrende landwirtschaftliche Arbeitsmaschine weist eine Steuervorrichtung auf, die zur Steuerung und/oder Regelung der Nebenaggregate ausgebildet und/oder programmiert ist. Vorzugsweise kann sich der Begriff "Steuervorrichtung" auf eine Elektronikschaltung (z. B. mit Mikroprozessor(en) und Datenspeicher(n)) und/oder eine mechanische Steuerung aufweisen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rücckopplung" umfasst sein. Diese Steuervorrichtung kann auch weitere Komponenten umfassen.

Die Steuervorrichtung ist zur Steuerung und/oder Regelung einer einstellbaren Kopplung zwischen dem Verbrennungsmotor und jedem Nebenaggregat ausgebildet und/oder programmiert.

Die Steuervorrichtung kann kommunizierend, insbesondere jeweils kommunizierend, mit den Nebenaggregaten und/oder kommunizierend mit dem Verbrennungsmotor verbunden sein. Ferner kann die Steuervorrichtung kommunizierend, insbesondere jeweils kommunizierend, mit den einstellbaren Kopplungen verbunden sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden.

Die Steuervorrichtung ist zur Erfassung von Betriebszuständen der Arbeitsmaschine und/oder Umgebungszuständen der Arbeitsmaschine ausgebildet ist. Die Betriebszustände der Arbeitsmaschine können Betriebszustände innerhalb der Arbeitsmaschine sein. Die Betriebszustände innerhalb der Arbeitsmaschine können sich auf Betriebszustände von Nebenaggregaten und/oder Arbeitsaggregaten innerhalb der Arbeitsmaschine beziehen. Die Betriebszustände können Temperatur, Drücke und/oder Drehzahlen sein. Die Umgebungszustände der Arbeitsmaschine können Umgebungszustände außerhalb der Arbeitsmaschine sein. Die Umgebungszustände können sich auf ein Feld und/oder einen Boden und/oder Pflanzen, insbesondere Pflanzenreihen beziehen, die in Fahrtrichtung vorausgehend vor der Arbeitsmaschine ausgebildet sind.

Die Steuervorrichtung ist dazu ausgebildet und/oder programmiert, vorausschauend eine ungeplante bevorstehende Drehzahländerung des Verbrennungsmotors in Abhängigkeit von Betriebszuständen der Arbeitsmaschine und/oder Umgebungszuständen der Arbeitsmaschine zu ermitteln. Die Steuervorrichtung kann dazu ausgebildet und/oder programmiert sein, die Drehzahl des Verbrennungsmotors zu steuern und/oder zu regeln. Diese Steuerung und/oder Regelung des Verbrennungsmotors mittels der Steuervorrichtung kann eine geplante Drehzahl oder eine geplante Drehzahländerung zum steuern und/oder regeln vorsehen. Eine Abweichung, die beispielweise auf Grund der Betriebszustände der Arbeitsmaschine und/oder der Umgebungszustände der Arbeitsmaschine auftreten können und von einer geplanten Drehzahl oder einer geplanten Drehzahländerung abweichen, werden als ungeplante Drehzahländerung angesehen. Unter vorausschauend ist zu verstehen, dass die Steuervorrichtung die ungeplante bevorstehende Drehzahländerung vor ihrer realen Auswirkung auf den Verbrennungsmotor ermittelt.

Ferner ist die Steuervorrichtung dazu ausgebildet und/oder programmiert, in Abhängigkeit der vorausschauend ermittelten bevorstehenden ungeplanten Drehzahländerung des Verbrennungsmotors wenigstens ein Nebenaggregat derart anzusteuern, dass der bevorstehenden ungeplanten Drehzahländerung des Verbrennungsmotors entgegengewirkt wird. Zwischen dem Verbrennungsmotor und wenigstens einem Nebenaggregat wird eine Zwischenkopplung bewirkt, die zwischen einer vollständigen Kopplung und einer vollständigen Entkopplung liegt. Bei einer vollständigen Kopplung kann eine maximal mögliche Energieübertragung vom Verbrennungsmotor zum gekoppelten Nebenaggregat bewirkt werden. Bei einer vollständigen Entkopplung wird keine Energieübertragung vom Verbrennungsmotor zum gekoppelten Nebenaggregat bewirkt.

Hierdurch wird einer ungeplanten bevorstehenden Drehzahländerung des Verbrennungsmotors entgegengewirkt. Hierdurch wird ein verbesserter Betrieb des Verbrennungsmotors, insbesondere bezüglich seiner Drehzahl, erzielt.

Die Steuervorrichtung kann dazu ausgebildet und/oder programmiert sein, ein Streckenverhalten eines jeden Arbeitsaggregates und/oder eines jeden Nebenaggregates mittels einem entsprechende Streckenmodells, insbesondere mittels einem computerimplementierten Verfahrens, vorausschauend zu ermitteln. Hierdurch kann die Steuervorrichtung während des Arbeitsbetriebs der landwirtschaftlichen Arbeitsmaschine zukünftige Auswirkungen auf die Arbeitsaggregate, insbesondere in Abhängigkeit von Betriebszuständen der Arbeitsmaschine und/oder Umgebungszuständen der Arbeitsmaschine, vorhersagen. Die Steuervorrichtung kann dazu ausgebildet und/oder programmiert sein, hierbei mögliche zukünftige Reaktionen der Arbeitsaggregate und/oder Reaktionen des Verbrennungsmotors, insbesondere Drehzahlveränderungen des Verbrennungsmotors, zu ermitteln und mittels eines implementierten Regelalgorithmus eine Ansteuerung der Nebenaggregate zu bewirken, sodass bevorstehenden ungeplanten Drehzahländerungen des Verbrennungsmotors entgegengewirkt wird.

Erfindungsgemäß ist vorgesehen, dass die Nebenaggregate und der Verbrennungsmotor derart ausgebildet sind, dass zwischen dem Verbrennungsmotor und jedem Nebenaggregat jeweils eine Kopplung einstellbar ist, wobei die Steuervorrichtung dazu ausgebildet und/oder programmiert ist, in Abhängigkeit der bevorstehenden ungeplanten Drehzahländerung des Verbrennungsmotors eine Kopplung zwischen dem Verbrennungsmotor und dem wenigstens einem Nebenaggregat einzustellen, die der bevorstehenden ungeplanten Drehzahländerung des Verbrennungsmotors entgegengewirkt.

Bei einer vorteilhaften Weiterbildung der erfindungsgemäßen Lösung ist vorgesehen, dass als einstellbare Kopplung zwischen dem Verbrennungsmotor und jedem Nebenaggregat jeweils eine Zwischenkopplung einstellbar ist, die zwischen einer vollständigen Kopplung und einer vollständigen Entkopplung liegt. Mittels der Zwischenkopplung kann die an das Nebenaggregat übertragene Leistung bezüglich der bevorstehenden ungeplanten Drehzahländerung in optimaler Weise angepasst werden.

Bei einer vorteilhaften Weiterbildung der erfindungsgemäßen Lösung ist vorgesehen, dass die Steuervorrichtung dazu ausgebildet und/oder programmiert ist, für eine zukünftige Zeitspanne vorausschauend zu ermitteln, ob eine ungeplante bevorstehende Drehzahländerung des Verbrennungsmotors in Abhängigkeit von Betriebszuständen der Arbeitsmaschine und/oder Umgebungszuständen der Arbeitsmaschine vorkommen wird. Mit anderen Worten ausgedrückt, wird in Abhängigkeit von Betriebszuständen der Arbeitsmaschine und/oder Umgebungszuständen der Arbeitsmaschine für die zukünftige Zeitspanne vorausschauend ermittelt, welche ungeplanten Drehzahländerungen auftreten könnten.

Bei einer vorteilhaften Weiterbildung der erfindungsgemäßen Lösung ist vorgesehen, dass die Zeitspanne bis zu 60 Sekunden oder mehr im Voraus beträgt. Zeitspanne kann beispielsweise bis zu bis zu 5 Sekunden, 10 Sekunden, 20 Sekunden, 30 Sekunden, 40 Sekunden, 50 Sekunden oder 60 Sekunden betragen. Die Steuervorrichtung kann dazu ausgebildet und/oder programmiert sein, die Zeitspanne in Abhängigkeit erfasster Umgebungszustände der Arbeitsmaschine und/oder erfasster Betriebszustände der Arbeitsmaschine auszuwählen.

Erfindungsgemäß ist vorgesehen, dass die Steuervorrichtung wenigstens eine Sensorvorrichtung zur Erfassung von Betriebszuständen der Arbeitsmaschine aufweist, und/oder dass die Steuervorrichtung wenigstens eine Sensorvorrichtung zur Erfassung von Umgebungszuständen der Arbeitsmaschine aufweist. Die Steuervorrichtung kann mit einer Sensorvorrichtung zur Erfassung von Betriebszuständen der Arbeitsmaschine und/oder mit einer Sensorvorrichtung zur Erfassung von Umgebungszuständen der Arbeitsmaschine kommunizierend verbunden sein. Die Sensorvorrichtung zur Erfassung von Betriebszuständen der Arbeitsmaschine kann wenigstens einen Sensor innerhalb der Arbeitsmaschine aufweisen. Die Sensorvorrichtung zur Erfassung von Umgebungszuständen der Arbeitsmaschine kann wenigstens einen Sensor am Außenbereich der Arbeitsmaschine aufweisen. Ein Sensor, der am Außenbereich der Arbeitsmaschine angeordnet ist, kann Umgebungszuständen der Arbeitsmaschine beispielsweise optisch und/oder thermisch erfassen. Die Sensorvorrichtung zur Erfassung von Umgebungszuständen der Arbeitsmaschine kann eine Vorfeldsensorik zum Erfassen von Bestandssituation ausbilden.

Bei einer vorteilhaften Weiterbildung der erfindungsgemäßen Lösung ist vorgesehen, dass die Sensorvorrichtung zur Erfassung von Betriebszuständen der Arbeitsmaschine wenigstens einen Sensor zur Erfassung eines Arbeitsparameters des Verbrennungsmotors aufweist, und/oder dass die Sensorvorrichtung zur Erfassung von Betriebszuständen der Arbeitsmaschine wenigstens einen Sensor zur Erfassung eines Arbeitsparameters wenigstens eines Nebenaggregates aufweist, und/oder dass die Sensorvorrichtung zur Erfassung von Betriebszuständen der Arbeitsmaschine wenigstens einen Sensor zur Erfassung eines Arbeitsparameters wenigstens eines Arbeitsaggregates aufweist.

Ein Sensor zur Erfassung eines Arbeitsparameters des Verbrennungsmotors kann ein Temperatursensor, ein Drucksensor und/oder ein Drehzahlsensor sein. Ein Sensor zur Erfassung des Arbeitsparameters des Nebenaggregates kann ein Temperatursensor, ein Drucksensor und/oder ein Drehzahlsensor sein. Ein Sensor zur Erfassung des Arbeitsparameters des Arbeitsaggregates kann ein Temperatursensor, ein Drucksensor und/oder ein Drehzahlsensor sein.

Bei einer vorteilhaften Weiterbildung der erfindungsgemäßen Lösung ist vorgesehen, dass die Sensorvorrichtung zur Erfassung von Umgebungszuständen der Arbeitsmaschine wenigstens eine Kameravorrichtung und/oder eine Laservorrichtung zur Erfassung von Umgebungszuständen der Arbeitsmaschine aufweist. Mittels einer Kameravorrichtung und oder einer Laservorrichtung können Umgebungszustände bezüglich eines Feldes und/oder eines Bodens und/oder Pflanzen, insbesondere Pflanzenreihen, erfasst werden. Hierbei kann es vorgesehen sein, dass die Sensorvorrichtung zur Erfassung von Umgebungszuständen der Arbeitsmaschine derart ausgebildetes, dass wenigstens eine Kameravorrichtung und/oder wenigstens eine Laservorrichtung die Umgebungszustände der Arbeitsmaschine in Fahrtrichtung der Arbeitsmaschine erfasst.

Bei einer vorteilhaften Weiterbildung der erfindungsgemäßen Lösung ist vorgesehen, dass ein Nebenaggregat eine elektrische Maschine ist, und/oder dass ein Nebenaggregat ein Drehstromgenerator ist, und/oder dass ein Nebenaggregat ein Klimakompressor ist, und/oder dass ein Nebenaggregat ein Kühlerlüftersystem und/oder dass ein Nebenaggregat ein Druckluftkompressor ist.

Bei einer vorteilhaften Weiterbildung der erfindungsgemäßen Lösung ist vorgesehen, dass der Verbrennungsmotor einen Turbolader aufweist, wobei die Steuervorrichtung zur Steuerung und/oder Regelung des Turboladers ausgebildet und/oder programmiert ist. Die Steuervorrichtung kann kommunizierend mit dem Turbolader verbunden sein. Der Turbolader kann mechanisch, elektrisch, pneumatisch und/oder hydraulisch von der Steuervorrichtung angesteuert und/oder geregelt werden.

Bei einer vorteilhaften Weiterbildung der erfindungsgemäßen Lösung ist vorgesehen, dass die Steuervorrichtung dazu ausgebildet und/oder programmiert ist, in Abhängigkeit der vorausschauend ermittelten bevorstehenden Drehzahländerung des Verbrennungsmotors zu ermitteln, ob dies eine Belastung oder Entlastung des Verbrennungsmotors im Vergleich zu einem geplanten Betrieb des Verbrennungsmotors ist. Es kann auch der Fall eintreten, dass weder eine Belastung noch eine Entlassung des Verbrennungsmotors im Vergleich zu einem geplanten Betrieb des Verbrennungsmotors vorliegt, sodass in diesem Fall keine ungeplante Drehzahländerung vorliegt und somit auf eine Entgegenwirkung verzichtet werden kann.

Bei einer vorteilhaften Weiterbildung der erfindungsgemäßen Lösung ist vorgesehen, dass die Steuervorrichtung dazu ausgebildet und/oder programmiert ist, im Falle einer vorausschauenden Belastung des Verbrennungsmotors die Kopplung der Nebenaggregate mit dem Verbrennungsmotor im Vergleich zur bestehenden Kopplung zu reduzieren, und dass die Steuervorrichtung dazu ausgebildet und/oder programmiert ist, im Falle einer vorausschauenden Entlastung des Verbrennungsmotors die Kopplung der Nebenaggregate mit dem Verbrennungsmotor im Vergleich zur bestehenden Kopplung zu erhöhen.

Unter einer Reduzierung kann hier zu verstehen sein, dass die Kopplung eines Nebenaggregates an den Verbrennungsmotor derart angepasst wird, dass das Nebenaggregat im Vergleich zu einer vor der Reduzierung bestehenden Kopplung einen kleineren Energieübertrag vom Verbrennungsmotor erhält. Dies führt zu einer Entlastung des Verbrennungsmotors, sodass einer bevorstehenden ungeplanten Drehzahländerung des Verbrennungsmotors aufgrund einer zusätzlichen Belastung des Verbrennungsmotors, die beispielsweise durch die Arbeitsaggregate aufgrund des kommenden Feldbestandes eintreten würde, entgegengewirkt wird.

Unter einer Erhöhung kann hier zu verstehen sein, dass die Kopplung eines Nebenaggregates an den Verbrennungsmotor derart angepasst wird, dass das Nebenaggregat im Vergleich zu einer vor der Erhöhung bestehenden Kopplung einen größeren Energieübertrag vom Verbrennungsmotor erhält. Dies führt zu einer Belastung des Verbrennungsmotors, sodass einer bevorstehenden ungeplanten Drehzahländerung des Verbrennungsmotors aufgrund einer zusätzlichen Entlastung des Verbrennungsmotors, die beispielsweise durch die Arbeitsaggregate aufgrund des kommenden Feldbestandes eintreten würde, entgegengewirkt wird.

Die Steuervorrichtung kann dazu ausgebildet und/oder programmiert sein, im Falle einer vorausschauenden Belastung oder Entlastung des Verbrennungsmotors die Kopplung der Nebenaggregate mit dem Verbrennungsmotor im Vergleich zur bestehenden Kopplungen für unterschiedliche Nebenaggregate unterschiedlich, insbesondere unterschiedlich priorisiert, anzupassen.

Bei einer vorteilhaften Weiterbildung der erfindungsgemäßen Lösung ist vorgesehen, dass die Steuervorrichtung dazu ausgebildet und/oder programmiert ist, im Falle einer vorausschauenden Belastung des Verbrennungsmotors den Turbolader anzusteuern und die Kopplung der Nebenaggregate mit dem Verbrennungsmotor im Vergleich zur bestehenden Kopplung zu reduzieren, und dass die Steuervorrichtung dazu ausgebildet und/oder programmiert ist, im Falle einer vorausschauenden Entlastung des Verbrennungsmotors den Turbolader nicht anzusteuern und die Kopplung der Nebenaggregate mit dem Verbrennungsmotor im Vergleich zur bestehenden Kopplung zu erhöhen. Dadurch kann eine bevorstehende ungeplante Drehzahländerung des Verbrennungsmotors, insbesondere des Dieselmotors, entgegengewirkt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine landwirtschaftliche Arbeitsmaschine, und
- Fig. 2: in schematischer und exemplarischer Darstellung die Verknüpfung von Komponenten der landwirtschaftlichen Arbeitsmaschine der Fig. 1.

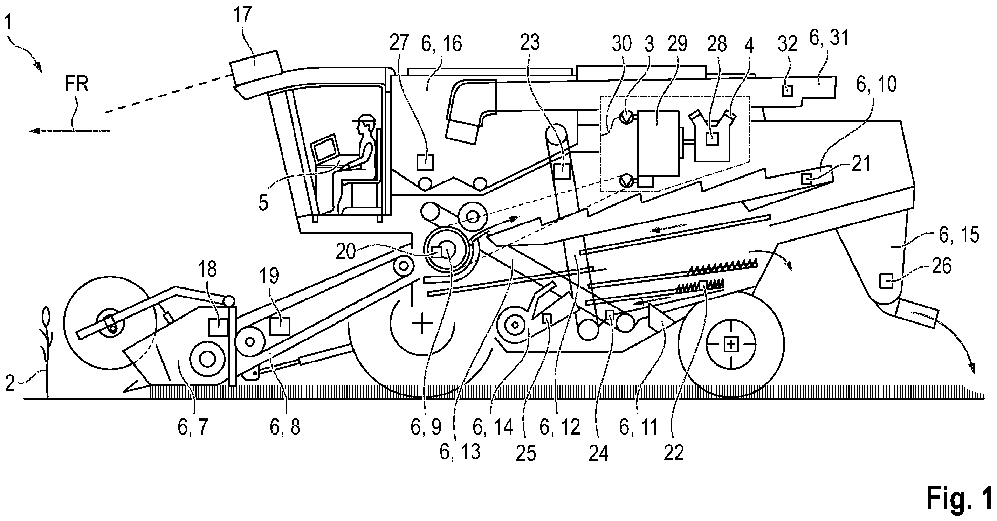

Die Fig. 1 zeigt eine landwirtschaftliche Arbeitsmaschine 1, insbesondere einen Mähdrescher, zur Aufnahme, Bearbeitung und/oder Weiterleitung von Erntegut 2. Der selbstfahrende Mähdrescher kann eine Steuervorrichtung 5 aufweisen. Im Betrieb des Mähdreschers 1 fährt der Mähdrescher 1 in eine Fahrtrichtung FR durch den Erntegutbestand 2 und nimmt dabei mit einem Schneidwerk 7 das Erntegut 2 auf. Mit einem Schrägförderer 8 wird dieses Erntegut 2 zum Dreschwerk 9 gefördert. In dem Dreschwerk 9, einer Abscheidungsvorrichtung 10 und einer Förder- und Reinigungsvorrichtung 11 werden die Körner vom restlichen Erntegut getrennt, sodass ein Erntegutstrom entsteht. Die Reinigungsvorrichtung 11 weist ein Gebläse 14 zur Reinigung auf. Der Mähdrescher 1 weist einen Kornelevator 12 zur Förderung eines Erntegutstroms von der Förder- und Reinigungsvorrichtung 11 zu einem Korntank 16 des Mähdreschers 1 auf. Ferner weist der Mähdrescher 1 einen Überkehrschnecke 13 und einen Strohhäcksler 15 auf. Außerdem weist der selbstfahrenden Mähdrescher 1 eine Korntankentleerungsvorrichtung 31 zur Entleerung des Korntanks 16 auf. Diese bisher genannten Komponenten des selbstfahrenden Mähdreschers 1 bilden mehrere Arbeitsaggregate 6 aus, die zur Aufnahme, Bearbeitung und/oder Weiterleitung des Ernteguts ausgebildet sind und über einen Verbrennungsmotor 4 antriebstechnisch versorgt werden. Mit anderen Worten ausgedrückt, können Arbeitsaggregate 6 des selbstfahrenden Mähdreschers 1 auf das Erntegut einwirken, während Nebenaggregate 3 nicht auf das Erntegut einwirken können. Beispielsweise wird das Arbeitsaggregate 6, welches als Dreschwerk 9 ausgebildet ist, über eine Kopplungsvorrichtung 29 mit dem Verbrennungsmotor 4 gekoppelt.

Ferner weist die selbstfahrende landwirtschaftliche Arbeitsmaschine 1 mehrere Nebenaggregate 3 auf, wobei in der Fig. 1 lediglich ein solches Nebenaggregat 3 dargestellt ist. Beispielsweise ist dieses Nebenaggregat 3 ein Drehstromgenerator, der über die Kopplungsvorrichtung 29 mit dem Verbrennungsmotor 4 gekoppelt ist. Das Nebenaggregat 3 kann über wenigstens eine elektrische Leitung 30 weitere nicht dargestellte elektrische Komponenten versorgen. Während ein Arbeitsaggregat 6 der selbstfahrenden landwirtschaftlichen Arbeitsmaschine 1 zur Aufnahme, Bearbeitung, und/oder Weiterleitung des Ernteguts 2 erforderlich ist, ist diese Aufnahme, Bearbeitung, und/oder Weiterleitung des Ernteguts auch im Falle abgeschalteter Nebenaggregate 3 möglich.

Die Steuervorrichtung 5 ist zur Steuerung und/oder Regelung der Nebenaggregate 3 ausgebildet und/oder programmiert, wobei die Steuervorrichtung 5 zur Erfassung von Betriebszuständen der Arbeitsmaschine 1 und/oder Umgebungszuständen der Arbeitsmaschine 1 ausgebildet ist. Die Steuervorrichtung 5 kann wenigstens eine Sensorvorrichtung 18, 19, 20, 21, 22, 23, 24, 25, 26, 27, 28 und/oder 32 zur Erfassung von Betriebszuständen der Arbeitsmaschine 1 und/oder eine Sensorvorrichtung 17 zur Erfassung von Umgebungszuständen der Arbeitsmaschine 1 aufweisen.

Die Sensorvorrichtung 18 des Arbeitsaggregates 6, welches als Schneidwerk 7 ausgebildet ist, ist zur Erfassung von Betriebszuständen des Schneidwerks 7 ausgebildet und/oder positioniert. Die Sensorvorrichtung 19 des Arbeitsaggregates 6, welches als Schrägförderer 8 ausgebildet ist, ist zur Erfassung von Betriebszuständen des Schrägförderers 8 ausgebildet und/oder positioniert. Die Sensorvorrichtung 20 des Arbeitsaggregates 6, welches als Dreschwerk 9 ausgebildet ist, ist zur Erfassung von Betriebszuständen des Dreschwerkes 9 ausgebildet und/oder positioniert. Die Sensorvorrichtung 21 des Arbeitsaggregates 6, welches als Abscheidevorrichtung 10 ausgebildet ist, ist zur Erfassung von Betriebszuständen der Abscheidevorrichtung 10 ausgebildet und/oder positioniert. Die Sensorvorrichtung 22 des Arbeitsaggregates 6, welches als Förder- und Reinigungsvorrichtung 11 ausgebildet ist, ist zur Erfassung von Betriebszuständen der Förder- und Reinigungsvorrichtung 11 ausgebildet und/oder positioniert. Die Sensorvorrichtung 23 des Arbeitsaggregates 6, welches als Kornelevator 12 ausgebildet ist, ist zur Erfassung von Betriebszuständen des Kornelevators 12 ausgebildet und/oder positioniert. Die Sensorvorrichtung 24 des Arbeitsaggregates 6, welches als Überkehrschnecke 13 ausgebildet ist, ist zur Erfassung von Betriebszuständen der Überkehrschnecke 13 ausgebildet und/oder positioniert. Die Sensorvorrichtung 25 des Arbeitsaggregates 6, welches als Gebläse 14 ausgebildet ist, ist zur Erfassung von Betriebszuständen des Gebläses 14 ausgebildet und/oder positioniert. Die Sensorvorrichtung 26 des Arbeitsaggregates 6, welches als Strohhäcksler 15 ausgebildet ist, ist zur Erfassung von Betriebszuständen des Strohhäckslers 15 ausgebildet und/oder positioniert. Die Sensorvorrichtung 27 des Arbeitsaggregates 6, welches als Korntank 16 ausgebildet ist, ist zur Erfassung von Betriebszuständen des Korntanks 16 ausgebildet und/oder positioniert. Die Sensorvorrichtung 28 des Arbeitsaggregates 6, welches als Verbrennungsmotor 4 ausgebildet ist, ist zur Erfassung von Betriebszuständen, insbesondere der Drehzahl, des Verbrennungsmotors 4 ausgebildet und/oder positioniert. Die Sensorvorrichtung 32 des Arbeitsaggregates 6, welches als Korntankentleerungsvorrichtung 31 ausgebildet ist, ist zur Erfassung von Betriebszuständen der Korntankentleerungsvorrichtung 31 ausgebildet und/oder positioniert.

Die Sensorvorrichtung 17 zur Erfassung von Umgebungszuständen der Arbeitsmaschine 1 kann als Kameravorrichtung und/oder eine Laservorrichtung zur Erfassung von Umgebungszuständen der Arbeitsmaschine 1 ausgebildet sein.

Die Steuervorrichtung 5 ist dazu ausgebildet und/oder programmiert ist, vorausschauend eine ungeplante bevorstehende Drehzahländerung des Verbrennungsmotors 4 in Abhängigkeit von Betriebszuständen der Arbeitsmaschine 1 und/oder Umgebungszuständen der Arbeitsmaschine 1 zu ermitteln und in Abhängigkeit der vorausschauend ermittelten bevorstehenden ungeplanten Drehzahländerungen des Verbrennungsmotors 4 wenigstens ein Nebenaggregat 3 derart anzusteuern, dass der bevorstehenden ungeplante Drehzahländerung des Verbrennungs-motors 4 entgegengewirkt wird.

Hierbei kann der Leistungsbedarf der landwirtschaftliche Arbeitsmaschine 1 in allen aufkommenden Betriebssituationen von der Steuervorrichtung 5 erfasst werden, um vorauszusehen bzw. abzuleiten und daraus kurzeitige und/oder langfristige Betriebsstrategien zu generieren (zeitlich z.B. bis zu 60 Sekunden oder mehr Sekunden). So kann eine möglichst effiziente und homogene Auslastung des dem Verbrennungsmotors realisiert werden.

Die Steuervorrichtung 5 kann dazu ausgebildet und/oder programmiert sein, ein Streckenverhalten eines jeden Arbeitsaggregates 6 und/oder eines jeden Nebenaggregates 3 mittels einem entsprechende Streckenmodells, insbesondere mittels einem computerimplementierten Verfahrens, vorausschauend zu ermitteln. Hierdurch kann die Steuervorrichtung 5 während des Arbeitsbetriebs des der landwirtschaftlichen Arbeitsmaschine zukünftige Auswirkungen auf die Arbeitsaggregate 6, insbesondere in Abhängigkeit von erfassten Bestandssituation und/oder Betriebssituation, vorhersagen. Die Steuervorrichtung 5 kann dazu ausgebildet und/oder programmiert sein, hierbei mögliche zukünftige Reaktionen des Verbrennungsmotors 4, insbesondere Drehzahlveränderungen des Verbrennungsmotors 4, zu ermitteln und mittels eines implementierten Regelalgorithmus eine Ansteuerung der Nebenaggregate 3 zu bewirken, sodass bevorstehenden ungeplanten Drehzahländerungen des Verbrennungsmotors 4 entgegengewirkt wird.

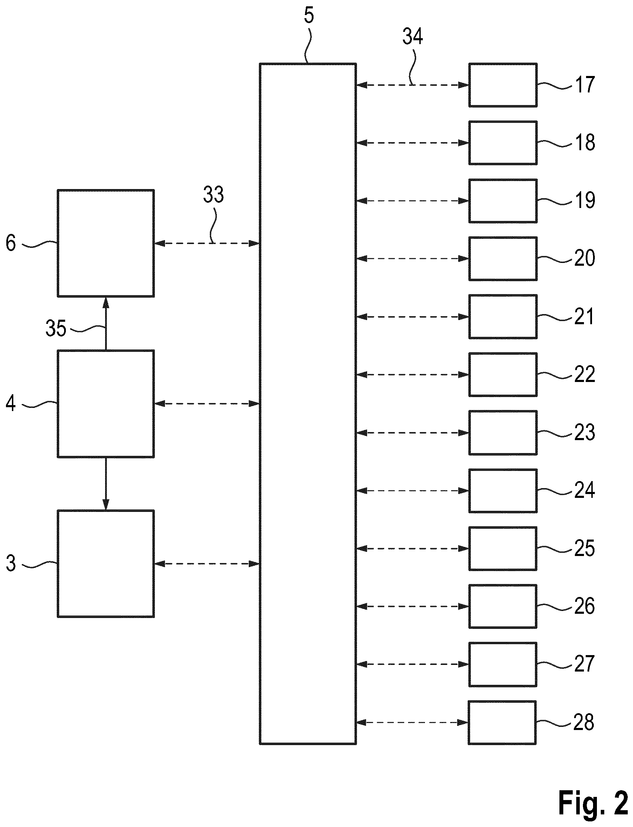

Die Fig. 2 zeigt beispielhaft, dass die Steuervorrichtung 5 mittels Verbindungen 33 kommunizierend, insbesondere jeweils kommunizierend, mit den Nebenaggregaten 3 und/oder kommunizierend mit dem Verbrennungsmotor 5 und/oder kommunizierend mit den Arbeitsaggregate 6 verbunden ist. Der Verbrennungsmotor 5 ist beispielweise mittels Kopplungen 35 antreibend mit den mit den Nebenaggregaten 3 und/oder mit den Arbeitsaggregaten 6 verbunden. Ferner ist die Steuervorrichtung 5 mittels Verbindungen 34 kommunizierend, insbesondere jeweils kommunizierend, mit den Sensorvorrichtungen 17, 18, 19, 20, 21, 22, 23, 24, 25, 26, 27 und/oder 28 verbunden.

### Bezugszeichenliste

- 1: Selbstfahrende landwirtschaftliche Arbeitsmaschine
- 2: Erntegut
- 3: Nebenaggregat
- 4: Verbrennungsmotor
- 5: Steuervorrichtung
- 6: Arbeitsaggregat
- 7: Schneidwerk
- 8: Schrägförderer
- 9: Dreschwerk
- 10: Abscheidevorrichtung
- 11: Förder- und Reinigungsvorrichtung
- 12: Kornelevator
- 13: Überkehrschnecke
- 14: Gebläse
- 15: Strohhäcksler
- 16: Korntank
- 17: Sensorvorrichtung zur Erfassung von Umgebungszuständen
- 18: Sensorvorrichtung zur Erfassung von Betriebszuständen
- 19: Sensorvorrichtung zur Erfassung von Betriebszuständen
- 20: Sensorvorrichtung zur Erfassung von Betriebszuständen
- 21: Sensorvorrichtung zur Erfassung von Betriebszuständen
- 22: Sensorvorrichtung zur Erfassung von Betriebszuständen
- 23: Sensorvorrichtung zur Erfassung von Betriebszuständen
- 24: Sensorvorrichtung zur Erfassung von Betriebszuständen
- 25: Sensorvorrichtung zur Erfassung von Betriebszuständen
- 26: Sensorvorrichtung zur Erfassung von Betriebszuständen
- 27: Sensorvorrichtung zur Erfassung von Betriebszuständen
- 28: Sensorvorrichtung zur Erfassung von Betriebszuständen
- 29: Kopplungsvorrichtung
- 30: elektrische Leitung
- 31: Korntankentleerungsvorrichtung
- 32: Sensorvorrichtung zur Erfassung von Betriebszuständen
- 33: Datenverbindung
- 34: Datenverbindung
- 35: Kopplung
- FR: Fahrtrichtung

## Patentansprüche

1. Selbstfahrende landwirtschaftliche Arbeitsmaschine (1) zum Aufnehmen, Bearbeiten und Weiterleiten von Erntegut (2),
- mit Nebenaggregaten (3) und einem Verbrennungsmotor (4),
- mit einer Steuervorrichtung (5), die zur Steuerung und/oder Regelung der Nebenaggregate (3) ausgebildet und/oder programmiert ist,
- wobei die Steuervorrichtung (5) zur Erfassung von Betriebszuständen der Arbeitsmaschine (1) und/oder Umgebungszuständen der Arbeitsmaschine (1) ausgebildet ist,
- wobei die Steuervorrichtung (5) dazu eingerichtet ist, vorausschauend eine ungeplante bevorstehende Drehzahländerung des Verbrennungsmotors (4) in Abhängigkeit von Betriebszuständen der Arbeitsmaschine (1) und/oder Umgebungszuständen der Arbeitsmaschine (1) zu ermitteln,
- wobei die Steuervorrichtung (5) dazu eingerichtet ist, in Abhängigkeit der vorausschauend ermittelten bevorstehenden ungeplanten Drehzahländerung des Verbrennungsmotors (4) wenigstens ein Nebenaggregat (3) derart anzusteuern, dass der bevorstehenden ungeplante Drehzahländerung des Verbrennungsmotors (4) entgegengewirkt wird, in dem zwischen dem Verbrennungsmotor (4) und wenigstens einem Nebenaggregat (3) eine Zwischenkopplung bewirkt wird, die zwischen einer vollständigen Kopplung und einer vollständigen Entkopplung liegt, wobei die Nebenaggregate (3) und der Verbrennungsmotor (4) derart ausgebildet sind, dass zwischen dem Verbrennungsmotor (4) und jedem Nebenaggregat (3) jeweils eine Kopplung einstellbar ist,
- wobei die Steuervorrichtung (5) dazu eingerichtet ist, in Abhängigkeit der bevorstehenden ungeplanten Drehzahländerung des Verbrennungsmotors (4) eine Kopplung, insbesondere eine Zwischenkopplung, zwischen dem Verbrennungsmotor (4) und dem wenigstens einem Nebenaggregat (3) einzustellen, die der bevorstehenden ungeplanten Drehzahländerung des Verbrennungsmotors (4) entgegengewirkt, wobei die Steuervorrichtung (5) wenigstens eine Sensorvorrichtung zur Erfassung von Betriebszuständen der Arbeitsmaschine (1) aufweist, und/oder
- die Steuervorrichtung (5) wenigstens eine Sensorvorrichtung zur Erfassung von Umgebungszuständen der Arbeitsmaschine (1) aufweist.

2. Selbstfahrende landwirtschaftliche Arbeitsmaschine (1) nach Anspruch 1,
**dadurch gekennzeichnet,**
- **dass** die Sensorvorrichtung zur Erfassung von Betriebszuständen der Arbeitsmaschine (1) wenigstens einen Sensor zur Erfassung eines Arbeitsparameters des Verbrennungsmotors (4) aufweist, und/oder
- **dass** die Sensorvorrichtung zur Erfassung von Betriebszuständen der Arbeitsmaschine (1) wenigstens einen Sensor zur Erfassung eines Arbeitsparameters wenigstens eines Nebenaggregates (3) aufweist, und/oder
- **dass** die Sensorvorrichtung zur Erfassung von Betriebszuständen der Arbeitsmaschine (1) wenigstens einen Sensor zur Erfassung eines Arbeitsparameters wenigstens eines Arbeitsaggregates (6) aufweist.

3. Selbstfahrende landwirtschaftliche Arbeitsmaschine (1) nach Anspruch 1 oder 2,
**dadurch gekennzeichnet,**
**dass** die Sensorvorrichtung zur Erfassung von Umgebungszuständen der Arbeitsmaschine (1) wenigstens eine Kameravorrichtung und/oder eine Laservorrichtung zur Erfassung von Umgebungszuständen der Arbeitsmaschine (1) aufweist.

4. Selbstfahrende landwirtschaftliche Arbeitsmaschine (1) nach einem der vorhergehenden Ansprüche,
**dadurch gekennzeichnet,**
- **dass** ein Nebenaggregat (3) eine elektrische Maschine ist, und/oder
- **dass** ein Nebenaggregat (3) ein Drehstromgenerator ist, und/oder
- **dass** ein Nebenaggregat (3) ein Klimakompressor ist, und/oder
- **dass** ein Nebenaggregat (3) ein Kühlerlüftersystem ist, und/oder
- **dass** ein Nebenaggregat (3) ein Druckluftkompressor.

5. Selbstfahrende landwirtschaftliche Arbeitsmaschine (1) nach einem der vorhergehenden Ansprüche,
**dadurch gekennzeichnet,**
**dass** der Verbrennungsmotor (3) einen Turbolader aufweist, wobei die Steuervorrichtung (5) zur Steuerung und/oder Regelung des Turboladers eingerichtet ist.

6. Selbstfahrende landwirtschaftliche Arbeitsmaschine (1) nach einem der vorhergehenden Ansprüche,
**dadurch gekennzeichnet,**
**dass** die Steuervorrichtung (5) dazu eingerichtet ist, in Abhängigkeit der vorausschauend ermittelten bevorstehenden Drehzahländerung des Verbrennungsmotors (4) zu ermitteln, ob dies eine Belastung oder Entlastung des Verbrennungsmotors (4) im Vergleich zu einem geplanten Betrieb des Verbrennungsmotors (4) ist.

7. Selbstfahrende landwirtschaftliche Arbeitsmaschine (1) nach Anspruch 6,
**dadurch gekennzeichnet,**
- **dass** die Steuervorrichtung (5) dazu eingerichtet ist, im Falle einer vorausschauenden Belastung des Verbrennungsmotors (4) die Kopplung der Nebenaggregate (3) mit dem Verbrennungsmotor (4) im Vergleich zur bestehenden Kopplung zu reduzieren, und
- **dass** die Steuervorrichtung (5) dazu eingerichtet ist, im Falle einer vorausschauenden Entlastung des Verbrennungsmotors (4) die Kopplung der Nebenaggregate (3) mit dem Verbrennungsmotor (4) im Vergleich zur bestehenden Kopplung zu erhöhen.

8. Selbstfahrende landwirtschaftliche Arbeitsmaschine (1) nach Anspruch 6 oder 7, **dadurch gekennzeichnet,**
- **dass** die Steuervorrichtung (5) dazu eingerichtet ist, im Falle einer vorausschauenden Belastung des Verbrennungsmotors (4) den Turbolader anzusteuern und die Kopplung der Nebenaggregate (3) mit dem Verbrennungsmotor (4) im Vergleich zur bestehenden Kopplung zu reduzieren, und
- **dass** die Steuervorrichtung (5) dazu eingerichtet ist, im Falle einer vorausschauenden Entlastung des Verbrennungsmotors (4) den Turbolader nicht anzusteuern und die Kopplung der Nebenaggregate (3) mit dem Verbrennungsmotor (4) im Vergleich zur bestehenden Kopplung zu erhöhen.

## Claims

1. A self-propelled agricultural working machine (1) for picking up, processing and relaying harvested material (2),
- with auxiliary assemblies (3) and a combustion engine (4),
- with a control device (5), which is configured and/or programmed for the control and/or regulation of the auxiliary assemblies (3),
- wherein the control device (5) is configured to detect operational states of the working machine (1) and/or environmental conditions of the working machine (1),
- wherein the control device (5) is configured to anticipatorily determine an unplanned imminent change in the speed of the combustion engine (4) as a function of operational states of the working machine (1) and/or environmental conditions of the working machine (1),
- wherein the control device (5) is configured to actuate at least one auxiliary assembly (3) as a function of the anticipatorily determined imminent unplanned change in the speed of the combustion engine (4) in a manner such that the imminent unplanned change in the speed of the combustion engine (4) is counteracted in that an intermediate coupling which is between a complete coupling and a complete decoupling is brought into effect between the combustion engine (4) and at least one auxiliary assembly (3), wherein the auxiliary assemblies (3) and the combustion engine (4) are constructed in a manner such that a respective coupling between the combustion engine (4) and each auxiliary assembly (3) can be adjusted,
- wherein the control device (5) is configured to adjust a coupling, in particular an intermediate coupling, between the combustion engine (4) and the at least one auxiliary assembly (3) as a function of the imminent unplanned change in the speed of the combustion engine (4) in a manner which counteracts the imminent unplanned change in the speed of the combustion engine (4), wherein the control device (5) has at least one sensor device for detecting operational states of the working machine (1), and/or
- the control device (5) has at least one sensor device for detecting environmental conditions of the working machine (1).

2. The self-propelled agricultural working machine (1) according to claim 1, **characterized in that**
- the sensor device for detecting operational states of the working machine (1) has at least one sensor for detecting a working parameter of the combustion engine (4), and/or
- the sensor device for detecting operational states of the working machine (1) has at least one sensor for detecting a working parameter of at least one auxiliary assembly (3), and/or
- the sensor device for detecting operational states of the working machine (1) has at least one sensor for detecting a working parameter of at least one working assembly (6).

3. The self-propelled agricultural working machine (1) according to claim 1 or claim 2, **characterized in that**
the sensor device for detecting environmental conditions of the working machine (1) has at least one camera device and/or a laser device for detecting environmental conditions of the working machine (1).

4. The self-propelled agricultural working machine (1) according to one of the preceding claims,
**characterized in that**
- an auxiliary assembly (3) is an electric machine, and/or
- an auxiliary assembly (3) is a three-phase generator, and/or
- an auxiliary assembly (3) is an air conditioning compressor, and/or
- an auxiliary assembly (3) is a cooling fan system, and/or
- an auxiliary assembly (3) is an air compressor.

5. The self-propelled agricultural working machine (1) according to one of the preceding claims,
**characterized in that**
the combustion engine (3) has a turbocharger, wherein the control device (5) is configured for the control and/or regulation of the turbocharger.

6. The self-propelled agricultural working machine (1) according to one of the preceding claims,
**characterized in that**
the control device (5) is configured to determine, as a function of the anticipatorily determined imminent change in the speed of the combustion engine (4), whether this is an increase in the load or a decrease in the load on the combustion engine (4) compared with a planned operation of the combustion engine (4).

7. The self-propelled agricultural working machine (1) according to claim 6, **characterized in that**
- in the event of an anticipated increase in the load on the combustion engine (4), the control device (5) is configured to reduce the coupling of the auxiliary assemblies (3) with the combustion engine (4) compared with the current coupling, and
- in the event of an anticipated decrease in the load on the combustion engine (4), the control device (5) is configured to increase the coupling of the auxiliary assemblies (3) with the combustion engine (4) compared with the current coupling.

8. The self-propelled agricultural working machine (1) according to claim 6 or claim 7, **characterized in that**
- in the event of an anticipated increase in the load on the combustion engine (4), the control device (5) is configured to actuate the turbocharger and to reduce the coupling of the auxiliary assemblies (3) with the combustion engine (4) compared with the current coupling, and
- in the event of an anticipated decrease in the load on the combustion engine (4), the control device (5) is configured not to actuate the turbocharger and to increase the coupling of the auxiliary assemblies (3) with the combustion engine (4) compared with the current coupling.

## Revendications

1. Machine agricole (1) automotrice, destinée à ramasser, traiter et transférer des produits récoltés (2),
- comprenant des organes auxiliaires (3) et un moteur à combustion interne (4),
- comprenant un dispositif de commande (5) qui est réalisé et/ou programmé en vue de la commande et/ou de la régulation des organes auxiliaires (3),
- le dispositif de commande (5) étant réalisé pour la détection d'états de fonctionnement de la machine (1) et/ou d'états de l'environnement de la machine (1),
- le dispositif de commande (5) étant conçu pour déterminer de manière prédictive un changement de régime imminent non prévu du moteur à combustion interne (4), en fonction d'états de fonctionnement de la machine (1) et/ou d'états de l'environnement de la machine (1),
- le dispositif de commande (5) étant conçu pour activer au moins un organe auxiliaire (3) en fonction du changement de régime imminent non prévu déterminé du moteur à combustion interne (4), de manière à agir à l'encontre du changement de régime imminent non prévu du moteur à combustion interne (4), par le fait d'établir entre le moteur à combustion interne (4) et au moins un organe auxiliaire (3) un accouplement intermédiaire qui se situe entre accouplement total et un désaccouplement total, les organes auxiliaires (3) et le moteur à combustion interne (4) étant réalisés de manière à ce qu'un accouplement puisse être réglé respectivement entre le moteur à combustion interne (4) et chaque organe auxiliaire (3),
- le dispositif de commande (5) étant conçu pour régler, en fonction du changement de régime imminent non prévu du moteur à combustion interne (4), un accouplement, notamment un accouplement intermédiaire, entre le moteur à combustion interne (4) et l'organe auxiliaire (3), au nombre d'au moins un, qui agit à l'encontre du changement de régime imminent non prévu du moteur à combustion interne (4), le dispositif de commande (5) comprenant au moins un dispositif de capteur pour la détection d'états de fonctionnement de la machine (1), et/ou
- le dispositif de commande (5) comprenant au moins un dispositif de capteur pour la détection d'états de l'environnement de la machine (1).

2. Machine agricole (1) automotrice selon la revendication 1, **caractérisée en ce que**
- pour détecter des états de fonctionnement de la machine de travail (1), le dispositif de capteur comprend au moins un capteur pour la détection d'un paramètre de travail du moteur à combustion interne (4), et/ou
- **en ce que** pour détecter des états de fonctionnement de la machine de travail (1), le dispositif de capteur comprend au moins un capteur pour la détection d'un paramètre de travail d'au moins un organe auxiliaire (3), et/ou
- **en ce que** pour détecter des états de fonctionnement de la machine de travail (1), le dispositif de capteur comprend au moins un capteur pour la détection d'un paramètre de travail d'au moins un organe de travail (6).

3. Machine agricole (1) automotrice selon la revendication 1 ou 2, **caractérisée en ce que**
pour détecter des états de l'environnement de la machine de travail (1), le dispositif de capteur comprend au moins un dispositif de caméra et/ou un dispositif laser pour la détection d'états de l'environnement de la machine de travail (1).

4. Machine agricole (1) automotrice selon une des revendications précédentes, **caractérisée en ce que**
- un organe auxiliaire (3) est une machine électrique, et/ou
- **en ce qu'**un organe auxiliaire (3) est un générateur de courant triphasé, et/ou
- **en ce qu'**un organe auxiliaire (3) est un compresseur de climatisation, et/ou
- **en ce qu'**un organe auxiliaire (3) est un système de ventilateur du radiateur, et/ou
- **en ce qu'**un organe auxiliaire (3) est un compresseur d'air comprimé.

5. Machine agricole (1) automotrice selon une des revendications précédentes, **caractérisée en ce que**
le moteur à combustion interne (3) comprend un turbocompresseur, le dispositif de commande (5) étant conçu pour la commande et/ou la régulation du turbocompresseur.

6. Machine agricole (1) automotrice selon une des revendications précédentes, **caractérisée en ce que**
le dispositif de commande (5) est conçu pour déterminer, en fonction du changement de régime imminent du moteur à combustion interne (4) déterminé de manière prédictive, si cela constitue une charge ou une décharge du moteur à combustion interne (4), comparé à un fonctionnement prévu du moteur à combustion interne (4).

7. Machine agricole (1) automotrice selon la revendication 6, **caractérisée en ce que**
- le dispositif de commande (5) est conçu pour réduire l'accouplement des organes auxiliaires (3) au moteur à combustion interne (4), comparé à l'accouplement existant, dans le cas d'une charge prédictive du moteur à combustion interne (4), et
- **en ce que** le dispositif de commande (5) est conçu pour augmenter l'accouplement des organes auxiliaires (3) au moteur à combustion interne (4), comparé à l'accouplement existant, dans le cas d'une décharge prédictive du moteur à combustion interne (4).

8. Machine agricole (1) automotrice selon la revendication 6 ou 7, **caractérisée en ce que**
- le dispositif de commande (5) est conçu pour activer le turbocompresseur et réduire l'accouplement des organes auxiliaires (3) au moteur à combustion interne (4), comparé à l'accouplement existant, dans le cas d'une charge prédictive du moteur à combustion interne (4), et
- **en ce que** le dispositif de commande (5) est conçu pour ne pas activer le turbocompresseur et augmenter l'accouplement des organes auxiliaires (3) au moteur à combustion interne (4), comparé à l'accouplement existant, dans le cas d'une décharge prédictive du moteur à combustion interne (4).
